# EUROPÄISCHE PATENTSCHRIFT

(11) **EP 3 876 402 B1**
(45) Veröffentlichungstag und Bekanntmachung des Hinweises auf die Patenterteilung: **24.07.2024**
(21) Anmeldenummer: 21160209.9
(22) Anmeldetag: 02.03.2021
(51) Int. Cl.: H02K 11/215, B60K 7/00, H02K 7/00, H02K 7/08, H02K 7/14

(54) **RADNABENANTRIEB MIT HOCHAUFLÖSENDER SENSORIK**
WHEEL HUB DRIVE WITH HIGH RESOLUTION SENSOR
ENTRAÎNEMENT DE MOYEU DE ROUE POURVU DE SYSTÈME DE CAPTEURS HAUTE RÉSOLUTION

(30) Priorität: 06.03.2020 DE 102020106063
(43) Veröffentlichungstag der Anmeldung: 08.09.2021
(73) Patentinhaber: WMT GmbH, 70469 Stuttgart (DE)
(72) Erfinder: Keßler, Max, 70176 Stuttgart (DE); Geertsema, Matthias, 70597 Stuttgart (DE); Weber, Stephan, 70180 Stuttgart (DE); Bosch, Alexander, 70794 Filderstadt (DE); Polonski, Dimitri, 70329 Stuttgart (DE)
(74) Vertreter: DREISS Patentanwälte PartG mbB

(56) Entgegenhaltungen:
- EP-A1- 3 382 857
- DE-A1- 102017 216 664
- JP-A- 2013 126 279
- US-A1- 2009 033 166
- US-A1- 2019 168 605

## Beschreibung

Die Erfindung betrifft einen elektrischen Radnabenantrieb mit den Merkmalen von Anspruch 1. Zudem betrifft die Erfindung ein Kleinfahrzeug mit einem solchen Radnabenantrieb.

Aus EP 3 382 857 A1 ist eine elektrische Maschine bekannt. Zum Erfassen von Drehstellungen und/oder einer Drehzahl des Rotors ist eine Erfassungseinrichtung ausgebildet. Die Erfassungseinrichtung weist ein in dem Aufnahmeraum angeordnetes und mit dem Rotor mitdrehbares erstes Sensorelement und eine in dem Aufnahmeraum angeordnete Leiterplatte mit einem zweiten Sensorelement auf. Mittels des zweiten Sensorelements ist unter Zusammenwirken mit dem ersten Sensorelement die Drehstellungen und/oder die Drehzahl des Rotors erfassbar. Die Leiterplatte ist an dem Deckelelement gehalten.

Dokument DE 10 2017 216664 A1 offenbart einen Antrieb, der einen Motor mit einem Innenrotor umfasst, der mit einer rotierenden Achse gekoppelt ist. Der Antrieb umfasst außerdem eine Spindelmutter und eine Spindel. Die Spindel wird dank einer Verdrehsicherung an der Drehung gehindert. Eine Sensoreinheit ist in einem Innenraum der Verdrehsicherung platziert, wobei der Sensormagnet auf der Innenseite der rotierenden Achse platziert ist.

Aus dem Stand der Technik sind elektrische Radnabenantriebe bekannt. Für deren Betrieb werden Sensorsysteme verwendet wie bspw. in DE 10 2010 045 952 A1 beschrieben. Derartige Sensorsysteme erfordern drehende, alternierende Informationsbereiche, bspw. Magnete, auf einem nicht zu kleinen Umfang sowie ein Auswertesystem. Bei ausreichend feiner Teilung der Informationsbereiche kann eine hohe Sensorauflösung erreicht werden, allerdings unter Inkaufnahme von Bauraum in axialer und radialer Richtung.

Das Dokument US 2009/033166 A1 offenbart einen Radnabenantrieb, der einen Axialmotor umfasst. Eine Sensoreinheit ist in der Nähe der Statorspulen platziert, wobei die Verkabelung des Sensors durch einen Innenraum der stationären Spindel des Motors verläuft.

Als kostengünstige und kompakte Alternative ist es in der Praxis üblich, mittels Hall-Sensoren die Magnete des Rotors (Arbeitsmagnete) direkt abzufragen. Derartige Systeme kommen bspw. in Hoverboard-Motoren oder Lüftern zum Einsatz. Hierbei ist das Auflösungsvermögen geringer. Bei niedrigen Drehzahlen ist nur eine vergleichsweise grobe Regelung des Motors möglich, was zu einem Ruckeln führen kann. Somit sind sanftes Anfahren/Bremsen und das Halten einer Position problematisch.

Der Erfindung liegt die Aufgabe zugrunde, mit einfachen konstruktiven Mitteln die Genauigkeit eines Radnabenantriebs zu verbessern. Es ist wünschenswert, dass sich auch bei niedrigen Geschwindigkeiten präzise Fahrmanöver umsetzen lassen.

Die Erfindung löst diese Aufgabe durch einen Radnabenantrieb mit den Merkmalen des Anspruchs 1.Im Innenraum ist eine Sensoreinheit zur Erfassung der Drehstellung oder der Drehzahl des Radelements relativ zur Achse angeordnet. Die Sensoreinheit weist mindestens ein Sensorelement mit einem sich in Axialrichtung erstreckenden Erfassungsbereich auf. Dabei erfasst das Sensorelement ein an dem Radelement drehfest angeordnetes und der Sensoreinheit zugewandtes Geberelement.

Dabei ist eine Sensoreinheit (Radsensoreinheit) geschützt innerhalb der Achse angeordnet. Es lässt sich eine axial besonders kompakte Bauweise realisieren. Die Achse kann als Radachse, d.h. als Achse für das Radelement, ausgebildet sein. Die Sensoreinheit ist an dem axialen Ende der Achse angeordnet. Ein Sensorelement der Sensoreinheit kann bspw. ein (Absolute)Angular Hall Encoder, Hall-Effect Angle Sensor, oder ein Multiturn-Drehgeber sein.

Das Geberelement ist insbesondere derart eingerichtet und bestimmt, dass es mit dem Sensorelement zusammenwirken kann. Das Geberelement ist der Sensoreinheit zugewandt und zumindest teilweise innerhalb des Erfassungsbereichs des Sensorelements angeordnet.

Der Elektromotor weist einen Stator und einen Rotor auf. Dabei ist der Stator drehfest mit der Achse gekoppelt und der Rotor ist drehfest mit dem Radelement gekoppelt.

Der Rotor ist relativ zum Stator insbesondere derart angeordnet, dass dieser mit dem Stator zusammenwirken kann. Der Stator kann die Achse nach radial außen und der Rotor den Stator nach radial außen umgeben. Das Radelement kann den Rotor nach radial außen umgeben. Das Radelement kann die Achse, den Stator und/oder den Rotor auch zumindest teilweise axial umgeben.

Das Radelement kann die Achse insbesondere an deren axialen Ende derart umgeben, dass das axiale Ende der Achse vor äußerlichen Einflüssen geschützt ist. Somit kann bspw. kein Schmutz und/oder keine Feuchtigkeit direkt in/an das axiale Ende der Achse gelangen.

In vorteilhafter Weise kann das Sensorelement ein oder mehrere Hallelemente, insbesondere vier Hallelemente, aufweisen. Bei mehreren, insbesondere bei vier Hallelementen, ist eine Erfassung eines sich ändernden Magnetfelds besonders genau möglich. Eine hochaufgelöste Kommutation des Elektromotors ist somit realisierbar und ein präzises Anfahren und/oder Abbremsen kann erreicht werden.

In zweckmäßiger Weise kann das Geberelement als ein Permanentmagnet mit einem eine Magnetisierungsrichtung vorgebenden Nordpol und einem Südpol ausgebildet sein. Hierbei handelt es sich um ein konstruktiv einfaches und robustes Geberelement.

Im Konkreten kann der Permanentmagnet als ein Kugel-, Stab oder Scheibenmagnet ausgebildet sein. Der Permanentmagnet kann insbesondere diametral magnetisiert sein. Mit anderen Worten kann der Permanentmagnet entlang seines Diameters, also Durchmessers, magnetisiert sein. Damit ist eine besonders genaue Winkelmessung möglich. Gewisse Abweichungen in Anordnung des Geberelements relativ zur Sensoreinheit haben keinen negativen Einfluss auf die Erfassungsgenauigkeit.

In vorteilhafter Weise kann der Permanentmagnet derart an dem Radelement angeordnet sein, dass seine Magnetisierungsrichtung orthogonal zur Axialrichtung der Achse angeordnet ist. Die Magnetisierungsrichtung verläuft vom Nordpol zum Südpol. Dadurch kann die Winkelmessung in der Genauigkeit weiter optimiert werden.

Im Rahmen einer bevorzugten Ausgestaltung können die Sensoreinheit, das Sensorelement, mindestens eines der Hallelemente und/oder das Geberelement zentriert entlang der Axialrichtung der Achse angeordnet sein. Mit einer solchen axial zentrierten Anordnung der einzelnen Komponenten ist insbesondere eine genauere Winkelmessung bei einer kompakteren Bauweise realisierbar.

In zweckmäßiger Weise kann die Sensoreinheit einen Temperatursensor und/oder ein Bus-Element mit einer Schnittstelle zum Anschluss an ein Bus-System umfassen. Ein solches Bus-System kann bspw. zu einem Kleinfahrzeug gehören (Bus-System des Kleinfahrzeugs). Die Schnittstelle des Bus-Elements kann als drahtgebundene Schnittstelle oder als drahtlose Schnittstelle ausgebildet sein, bspw. eine mittels Funk arbeitende Schnittstelle.

Mittels des Temperatursensors kann die Temperatur gemessen werden. Mögliche temperaturbedingte Schwankungen der Genauigkeit der Winkelmessung können berücksichtigt werden. Ein temperaturunabhängiger bzw. -stabiler Betrieb des elektrischen Radnabenantriebs ist damit begünstigt.

Die Achse weist am axialen Ende einen radialen Absatz auf. An diesem Absatz ist die Sensoreinheit angeordnet. Damit kann die Sensoreinheit innerhalb der Achse geschützt und besonders stabil angeordnet sein.

Im Rahmen einer bevorzugten Ausgestaltung kann das Geberelement innerhalb des Innenraumes angeordnet sein. Damit ist das Geberelement ebenfalls innerhalb der Achse geschützt angeordnet. Das Geberelement ist weiterhin an dem Radelement angeordnet.

Die Sensoreinheit umfasst eine Platine. Insbesondere das Sensorelement, der Temperatursensor und/oder das Bus-Element können auf der Platine angeordnet sein.

In vorteilhafter Weise kann das Radelement mittels einem oder mehreren Wälzlagern drehbar an der Achse gelagert sein. Abhängig von der jeweiligen Anforderung kann eine unterschiedliche Anzahl an Wälzlagern gewählt werden. Eine höhere Anzahl an Wälzlagern kann die Stabilität des Radelements erhöhen. Zudem wird die Belastung während des Betriebes, d. h. während des Rotierens des Radelements, auf die verschiedenen Wälzlager verteilt, so dass Belastung und Verschleiß einzelner Lager reduziert werden kann.

Im Rahmen einer bevorzugten Ausgestaltung kann das Radelement als ein ein- oder mehrteiliges Rad ausgebildet sein. Das Radelement kann Bestandteil eines Rades bilden. Dies kann bspw. eine Felge sein.

Die eingangs genannte Aufgabe wird auch durch ein Kleinfahrzeug mit einem Radnabenantrieb mit den oben beschriebenen Merkmalen gelöst. Hinsichtlich der damit erzielbaren Vorteile sei auf die diesbezüglichen Ausführungen zum Radnabenantrieb verwiesen. Zur weiteren Ausgestaltung des Kleinfahrzeugs können die im Zusammenhang mit dem Radnabenantrieb beschriebenen Maßnahmen dienen.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigen:
- Fig.1: in einer schematischen Schnittansicht eine Ausführungsform eines elektrischen Radnabenantriebs; und
- Fig.2: in einer schematischen perspektivischen Ansicht ein Geberelement des elektrischen Radnabenantriebs aus Figur 1.

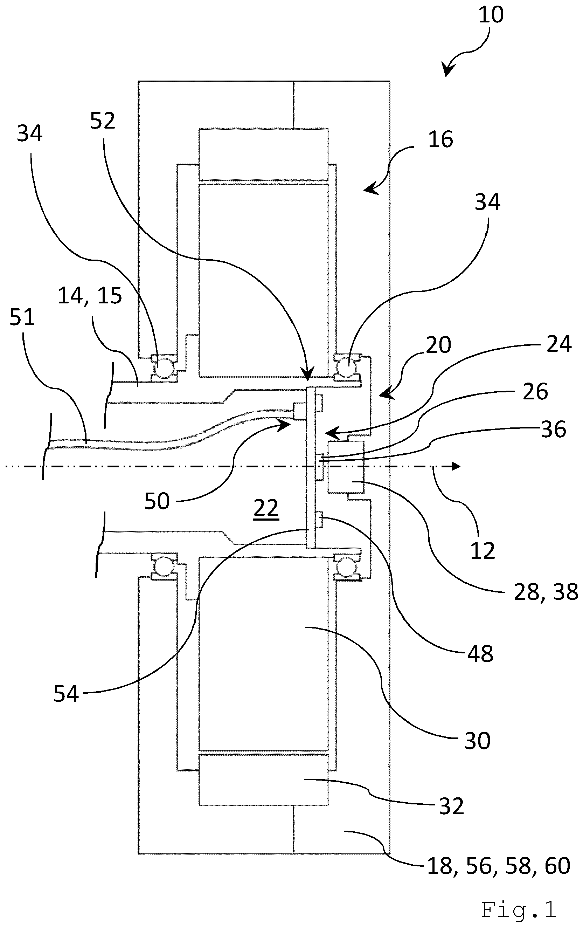

Figur 1 zeigt einen elektrischen Radnabenantrieb für ein Kleinfahrzeug, wobei der elektrische Radnabenantrieb insgesamt mit dem Bezugszeichen 10 bezeichnet ist.

Der elektrische Radnabenantrieb 10 weist eine Achse 14 auf, die sich entlang einer Axialrichtung 12 erstreckt. Vorliegend ist die Achse 14 als Hohlachse 15 ausgestaltet. Auf der Hohlachse 15 ist ein Elektromotor 16 angeordnet.

Der elektrische Radnabenantrieb 10 umfasst weiter ein Radelement 18, welches durch den Elektromotor 16 antreibbar ist und welches den Elektromotor 16 zumindest teilweise nach außen umgibt. Das Radelement 18 ist an einem axialen Ende 20 der Hohlachse 15 drehbar gelagert.

Da die Achse 14 vorliegend als Hohlachse 15 ausgebildet ist, ist sie an dem axialen Ende 20 ebenfalls hohl ausgebildet und begrenzt einen Innenraum 22 nach radial außen.

Im Innenraum 22 ist eine Sensoreinheit 24 angeordnet. Diese kann die Drehstellung, den Winkel und/oder die Drehzahl des Radelements 18 relativ zur Hohlachse 15 erfassen.

Die Sensoreinheit 24 weist mindestens ein Sensorelement 26 auf. Das Sensorelement 26 weist einen sich in Axialrichtung 12 erstreckenden Erfassungsbereich auf. Das Sensorelement 26 wirkt mit einem Geberelement 28 zusammen. Das Geberelement 28 ist an dem Radelement 18 drehfest angeordnet bzw. befestigt und der Sensoreinheit 26 zugewandt.

Der Elektromotor 16 weist einen Stator 30 und einen Rotor 32 auf. Der Stator 30 ist drehfest mit der Hohlachse 15 gekoppelt. Vorliegend ist der Stator 30 an der Außenseite der Hohlachse 15 angeordnet. Der Rotor 32 ist drehfest mit dem Radelement 18 gekoppelt. Vorliegend ist der Rotor 32 radial um den Stator 30 angeordnet. Es ist ebenfalls denkbar, dass der Stator 30 radial um den Rotor 32 angeordnet ist.

Vorliegend wird der Stator 30 zum Betrieb des Elektromotors 16 bestromt. Dabei wird elektrischer Strom durch einen im Stator 30 aufgewickelten elektrischen Leiter (nicht dargestellt) durchgeleitet, um ein magnetisches Feld zu erzeugen. Dieses magnetische Feld ist bekanntermaßen für den Betrieb eines Elektromotors 16 notwendig. Bei einem solchen Bestromen erwärmen sich der Stator 30 und in geringerem Maße auch der Rotor 32.

Das Radelement 18 ist mittels zwei Wälzlagern 34 drehbar an der Hohlachse 15 gelagert. Somit kann das Radelement 18 und der Rotor 32 um die Hohlachse 15 rotieren. Vorliegend ist zwischen den beiden Wälzlagern 34 der Stator 30 angeordnet.

Die durch das Rotieren des Radelements 18 entstehende Belastung wird auf die beiden Wälzlager 34 verteilt. Vorliegend sind diese als separate Elemente ausgebildet. Sie können somit unabhängig voneinander bspw. zu Reparationszwecken ausgebaut, ausgetauscht und/oder ersetzt werden.

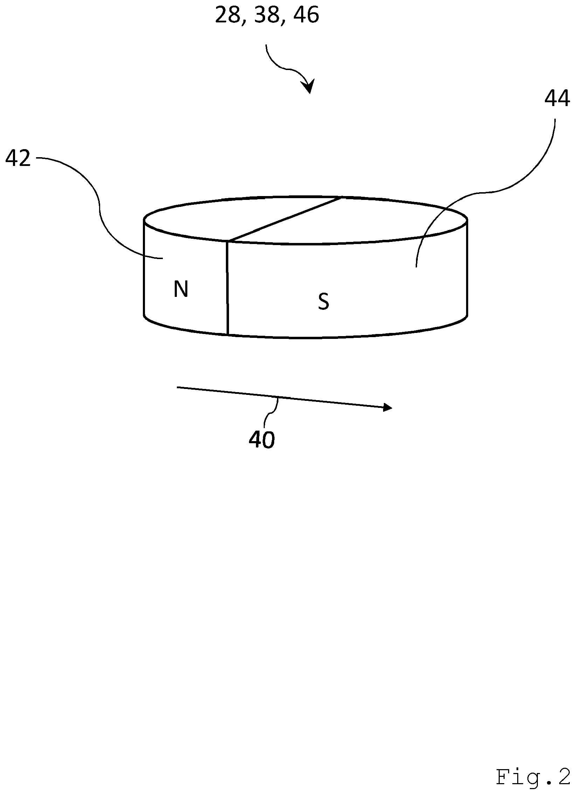

Das Geberelement 28 ist vorliegend als Permanentmagnet 38 ausgestaltet. Ein solches Geberelement 28 ist in Figur 2 gezeigt. Der Permanentmagnet 38 weist einen Nordpol 42 und einen Südpol 44 auf. Diese geben eine Magnetisierungsrichtung 40 vor, die vom Nordpol 42 zum Südpol 44 zeigt.

Im Beispiel ist der Permanentmagnet 38 als Scheibenmagnet 46 ausgeführt. Dieser ist diametral magnetisiert. Mit anderen Worten ist der Scheibenmagnet 46 entlang seines Durchmessers magnetisiert, wie in Figur 2 gezeigt. In Figur 2 wird der Nordpol 42 durch den Buchstaben N und der Südpol durch den Buchstaben S dargestellt.

Das vom Permanentmagneten 38 erzeugte magnetische Feld erstreckt sich in den Erfassungsbereich des Sensorelements 26.

Das Sensorelement 26 weist mindestens ein Hallelement 36 auf (vgl. Fig.1). Somit kann das vom Permanentmagneten 38 erzeugte magnetische Feld detektiert werden.

Wie weiter in Figur 1 gezeigt, ist der Permanentmagnet 38 zentriert am Radelement 18 angeordnet. Damit ist die Magnetisierungsrichtung 40 des Permanentmagneten 38 orthogonal zur Axialrichtung 12 der Hohlachse 15 angeordnet.

Vorliegend sind Sensorelement 26 und der Permanentmagnet 38 zentriert entlang der Axialrichtung 12 der Hohlachse 15 angeordnet.

Während das Radelement 18 rotiert, rotiert der Permanentmagnet 28 mit dem Radelement 18 mit. Durch die Rotation des Permanentmagneten 28 ändert sich das den Permanentmagneten 28 umgebende magnetische Feld. Diese Veränderungen im Magnetfeld werden von der Sensoreinheit 26 und insbesondere von dem mindestens einen Hallelement 36 detektiert. Somit lässt sich die jeweilige Rotationsposition, -winkel, -geschwindigkeit des Permanentmagneten 28 und somit des Radelements 18 bestimmen.

Die Sensoreinheit 24 weist weiter einen Temperatursensor 48 auf. Mithilfe eines solchen Temperatursensors 48 lässt sich die Temperatur im und/oder an der Sensoreinheit 24 und insbesondere im Innenraum 22 bestimmen. Die gemessene Temperatur kann dazu verwendet werden, mögliche durch die Temperatur beeinflusste Messungsschwankungen des Sensorelements 26 zu korrigieren.

Die Sensoreinheit 24 weist zudem ein Bus-Element 50 mit einer Schnittstelle zum Anschluss an ein Bus-System auf. Ein solches Bus-System kann zu einem Kleinfahrzeug gehören. Ein solcher Anschluss kann mittels des Kabels 51 realisiert werden. Eine Ausgestaltung des Bus-Elements mit einer drahtlosen Schnittstelle, bspw. über Funk, ist ebenfalls denkbar, wie oben erläutert. Das Kabel 51 verläuft im Inneren der Hohlachse 15. Alternativ oder ergänzend kann das Kabel 51 zur Übertragung von elektrischer Energie oder zur Übertragung von elektrischen Signalen zur bzw. von der Sensoreinheit 24 dienen.

Die Sensoreinheit 24 ist an einem radialen Absatz 52 angeordnet. Somit lässt sich die Sensoreinheit 24 innerhalb der Hohlachse 15 mit einfachen baulichen Mitteln stabil fixieren.

Der Permanentmagnet 28 ragt derart in das hohle axiale Ende 20 der Hohlachse 15, dass dieser ebenfalls sich zumindest nach radial außen schützend im Innenraum 22 befindet.

Zudem ist der Permanentmagnet 28 in unmittelbarer Nähe des Sensorelements 26 angeordnet. Dadurch wird zum einen eine insbesondere in axialer Richtung kompakte Bauweise erzielt, und zum anderen die Genauigkeit des mittels des Sensorelements 26 gemessenen Magnetfeldes verbessert.

Die Sensoreinheit 24 umfasst weiter eine Platine 54. Vorliegend sind der Temperatursensor 48, das Bus-Element 50 und das Sensorelement 26 auf der Platine 54 angeordnet. Wie zuvor bereits angedeutet, ist die Platine 54 ist an dem Absatz 52 fixiert.

Das axiale Ende 20 der Hohlachse 15 wird durch das Radelement 18 geschützt. Dieses ist im Bereich des offenen Endes 20 der Hohlachse 15 geschlossen ausgestaltet. Damit sind auch die Sensoreinheit 26 und der Permanentmagnet 38 ebenfalls nach axial außen hin geschützt.

## Patentansprüche

1. Elektrischer Radnabenantrieb (10), insbesondere für Kleinfahrzeuge, mit einer sich entlang einer Axialrichtung (12) erstreckenden Achse (14), einem auf der Achse (14) angeordneten Elektromotor (16) und einem durch den Elektromotor (16) antreibbaren Radelement (18), welches den Elektromotor (16) zumindest teilweise nach außen umgibt und an einem axialen Ende (20) der Achse (14) drehbar gelagert ist, wobei die Achse (14) zumindest an dem axialen Ende (20) hohl ausgebildet ist und einen Innenraum (22) nach radial außen begrenzt, wobei im Innenraum (22) eine Sensoreinheit (24) zur Erfassung der Drehstellung oder der Drehzahl des Radelements (18) relativ zur Achse (14) angeordnet ist, wobei die Sensoreinheit (24) mindestens ein Sensorelement (26) mit einem sich in Axialrichtung (12) erstreckenden Erfassungsbereich und eine Platine (54) aufweist, wobei das Sensorelement (26) ein an dem Radelement (18) drehfest angeordnetes und der Sensoreinheit (26) zugewandtes Geberelement (28) zumindest teilweise erfasst, wobei der Elektromotor (16) einen Stator (30) und einen Rotor (32) aufweist, wobei der Stator (30) drehfest mit der als Hohlachse (15) ausgebildeten Achse (14) gekoppelt ist und der Rotor (32) drehfest mit dem Radelement (18) gekoppelt ist, wobei die Achse (14) am axialen Ende (20) einen radialen Absatz (52) aufweist, an dem die Platine (54) fixiert ist.

2. Elektrischer Radnabenantrieb (10), nach Anspruch 1, **dadurch gekennzeichnet, dass** das Sensorelement (26) ein oder mehrere Hallelemente (36), insbesondere vier Hallelemente (36), aufweist.

3. Elektrischer Radnabenantrieb (10), nach einem der voranstehenden Ansprüche, **dadurch gekennzeichnet, dass** das Geberelement (28) als ein Permanentmagnet (38) mit einem eine Magnetisierungsrichtung (40) vorgebenden Nordpol (42) und einem Südpol (44) ausgebildet ist.

4. Elektrischer Radnabenantrieb (10), nach dem voranstehenden Anspruch, **dadurch gekennzeichnet, dass** der Permanentmagnet (38) als ein Kugel-, Stab oder Scheibenmagnet (46) ausgebildet ist, der insbesondere diametral magnetisiert ist, und/oder dass der Permanentmagnet (38) derart an dem Radelement (18) angeordnet ist, dass seine Magnetisierungsrichtung (40) orthogonal zur Axialrichtung (12) der Achse (14) angeordnet ist.

5. Elektrischer Radnabenantrieb (10), nach einem der voranstehenden Ansprüche, **dadurch gekennzeichnet, dass** die Sensoreinheit (24), das Sensorelement (26), mindestens eines der Hallelemente (36) und/oder das Geberelement (28) zentriert entlang der Axialrichtung (12) der Achse (14) angeordnet ist/sind.

6. Elektrischer Radnabenantrieb (10), nach einem der voranstehenden Ansprüche, **dadurch gekennzeichnet, dass** die Sensoreinheit (24) einen Temperatursensor (48) und/oder ein Bus-Element (50) mit einer Schnittstelle zum Anschluss an ein Bus-System umfasst.

7. Elektrischer Radnabenantrieb (10), nach einem der voranstehenden Ansprüche, **dadurch gekennzeichnet, dass** das Geberelement (28) innerhalb des Innenraumes (22) angeordnet ist.

8. Elektrischer Radnabenantrieb (10), nach einem der voranstehenden Ansprüche, **dadurch gekennzeichnet, dass** das Sensorelement (26), der Temperatursensor (48) und/oder das Bus-Element (50) auf der Platine (54) angeordnet ist/sind.

9. Elektrischer Radnabenantrieb (10), nach einem der voranstehenden Ansprüche, **dadurch gekennzeichnet, dass** das Radelement (18) mittels einem oder mehreren Wälzlagern (34) drehbar an der Achse (14) gelagert ist und/oder dass das Radelement (18) als ein einteiliges oder mehrteiliges Rad (56) ausgebildet ist oder Bestandteil (58) eines Rades bildet, insbesondere als eine Felge (60).

10. Kleinfahrzeug mit einem elektrischen Radnabenantrieb (10) nach einem der voranstehenden Ansprüche.

## Claims

1. Electric wheel hub drive (10), in particular for small vehicles, comprising an axle (14) extending in an axial direction (12), an electric motor (16) arranged on the axle (14), and a wheel element (18) which can be driven by the electric motor (16), surrounds the electric motor (16) at least partially on the outside, and is rotatably mounted on an axial end (20) of the axle (14), wherein the axle (14) is hollow at least at the axial end (20) and radially outwardly delimits an interior (22), wherein a sensor unit (24) for detecting the rotational position or the rotational speed of the wheel element (18) relative to the axle (14) is arranged in the interior (22), wherein the sensor unit (24) comprises at least one sensor element (26) having a detection region extending in the axial direction (12) and a circuit board (54), wherein the sensor element (26) at least partially detects an encoder element (28), which is mounted on the wheel element (18) for conjoint rotation and faces the sensor unit (26), wherein the electric motor (16) comprises a stator (30) and a rotor (32), wherein the stator (30) is rotationally fixedly coupled to the axle (14) designed as a hollow axle (15) and the rotor (32) is rotationally fixedly coupled to the wheel element (18), wherein the axle (14) has at the axial end (20) a radial shoulder (52) on which the circuit board (54) is fixed.

2. Electric wheel hub drive (10) according to claim 1, **characterized in that** the sensor element (26) has one or more Hall elements (36), in particular four Hall elements (36).

3. Electric wheel hub drive (10) according to any of the preceding claims, **characterized in that** the encoder element (28) is designed as a permanent magnet (38) having a north pole (42), which defines a magnetization direction (40), and a south pole (44).

4. Electric wheel hub drive (10) according to the preceding claim, **characterized in that** the permanent magnet (38) is designed as a sphere, bar or disc magnet (46) which is in particular diametrically magnetized, **and/or in that** the permanent magnet (38) is arranged on the wheel element (18) in such a way that the magnetization direction (40) thereof is orthogonal to the axial direction (12) of the axle (14).

5. Electric wheel hub drive (10) according to any of the preceding claims, **characterized in that** the sensor unit (24), the sensor element (26), at least one of the Hall elements (36) and/or the encoder element (28) is/are arranged so as to be centered in the axial direction (12) of the axle (14).

6. Electric wheel hub drive (10) according to any of the preceding claims, **characterized in that** the sensor unit (24) comprises a temperature sensor (48) and/or a bus element (50) having an interface for connection to a bus system.

7. Electric wheel hub drive (10) according to any of the preceding claims, **characterized in that** the encoder element (28) is arranged within the interior (22).

8. Electric wheel hub drive (10) according to any of the preceding claims, **characterized in that** the sensor element (26), the temperature sensor (48) and/or the bus element (50) is/are arranged on the circuit board (54).

9. Electric wheel hub drive (10) according to any of the preceding claims, **characterized in that** the wheel element (18) is rotatably mounted on the axle (14) by means of one or more rolling bearings (34) **and/or in that** the wheel element (18) is designed as a one-part or multi-part wheel (56) or forms part (58) of a wheel, in particular as a rim (60).

10. Small vehicle comprising an electric wheel hub drive (10) according to any of the preceding claims.

## Revendications

1. Entraînement électrique de moyeu de roue (10), en particulier pour petits véhicules, avec un axe (14) s'étendant le long d'une direction axiale (12), un moteur électrique (16) disposé sur l'axe (14) et un élément de roue (18) pouvant être entraîné par le moteur électrique (16), lequel entoure au moins partiellement le moteur électrique (16) vers l'extérieur et est monté de manière rotative sur une extrémité axiale (20) de l'axe (14), dans lequel l'axe (14) est creux au moins à l'extrémité axiale (20) et délimite un espace intérieur (22) radialement vers l'extérieur, dans lequel une unité de capteur (24) est disposée dans l'espace intérieur (22) pour détecter la position de rotation ou la vitesse de rotation de l'élément de roue (18) par rapport à l'axe (14), dans lequel l'unité de capteur (24) présente au moins un élément de capteur (26) avec une zone de détection s'étendant dans la direction axiale (12) et une platine (54), dans lequel l'élément de capteur (26) détecte au moins partiellement un élément transmetteur (28) disposé de manière solidaire en rotation sur l'élément de roue (18) et orienté vers l'unité de capteur (26), dans lequel le moteur électrique (16) présente un stator (30) et un rotor (32), dans lequel le stator (30) est couplé solidairement en rotation à l'axe (14) réalisé sous forme d'axe creux (15) et le rotor (32) est couplé solidairement en rotation à l'élément de roue (18), dans lequel l'axe (14) présente à l'extrémité axiale (20) un épaulement radial (52) sur lequel est fixée la platine (54).

2. Entraînement électrique de moyeu de roue (10), selon la revendication 1, **caractérisé en ce que** l'élément de capteur (26) présente un ou plusieurs éléments à effet Hall (36), en particulier quatre éléments à effet Hall (36).

3. Entraînement électrique de moyeu de roue (10), selon l'une quelconque des revendications précédentes, **caractérisé en ce que** l'élément transmetteur (28) est réalisé sous la forme d'un aimant permanent (38) avec un pôle nord (42) définissant une direction d'aimantation (40) et un pôle sud (44) .

4. Entraînement électrique de moyeu de roue (10), selon la revendication précédente, **caractérisé en ce que** l'aimant permanent (38) est réalisé sous la forme d'un aimant à bille, à barre ou à disque (46), qui est notamment magnétisé diamétralement, et/ou **en ce que** l'aimant permanent (38) est disposé sur l'élément de roue (18), de telle sorte que sa direction de magnétisation (40) est disposée orthogonalement à la direction axiale (12) de l'axe (14).

5. Entraînement électrique de moyeu de roue (10), selon l'une quelconque des revendications précédentes, **caractérisé en ce que** l'unité de capteur (24), l'élément de capteur (26), au moins l'un des éléments Hall (36) et/ou l'élément transmetteur (28) est/sont disposé(s) de manière centrée le long de la direction axiale (12) de l'axe (14).

6. Entraînement électrique de moyeu de roue (10), selon l'une quelconque des revendications précédentes, **caractérisé en ce que** l'unité de capteur (24) comprend un capteur de température (48) et/ou un élément de bus (50) avec une interface pour le raccordement à un système de bus.

7. Entraînement électrique de moyeu de roue (10), selon l'une quelconque des revendications précédentes, **caractérisé en ce que** l'élément transmetteur (28) est disposé à l'intérieur de l'espace intérieur (22).

8. Entraînement électrique de moyeu de roue (10), selon l'une quelconque des revendications précédentes, **caractérisé en ce que** l'élément de capteur (26), le capteur de température (48) et/ou l'élément de bus (50) est/sont disposé(s) sur la platine (54).

9. Entraînement électrique de moyeu de roue (10), selon l'une quelconque des revendications précédentes, **caractérisé en ce que** l'élément de roue (18) est logé de manière rotative sur l'axe (14) au moyen d'un ou de plusieurs paliers à roulement (34) et/ou **en ce que** l'élément de roue (18) est réalisé sous la forme d'une roue (56) en une ou plusieurs parties ou forme un composant (58) d'une roue, notamment sous la forme d'une jante (60).

10. Petit véhicule avec un entraînement électrique de moyeu de roue (10) selon l'une quelconque des revendications précédentes.
